(19) Europäisches Patentamt / European Patent Office / Office européen des brevets

(11) **EP 4 202 554 B1**

(12) **EUROPEAN PATENT SPECIFICATION**

(45) Date of publication and mention
of the grant of the patent:
**16.04.2025   Bulletin 2025/16**

(21) Application number: **21871380.8**

(22) Date of filing: **15.09.2021**

(51) International Patent Classification (IPC):
**G03G 15/04** (2006.01)        **G03G 15/043** (2006.01)

(52) Cooperative Patent Classification (CPC):
**G03G 15/043; G02B 26/125; G03G 15/0409;
G03G 15/0435**

(86) International application number:
**PCT/CN2021/118604**

(87) International publication number:
**WO 2022/063009 (31.03.2022 Gazette 2022/13)**

(54) **OPTICAL SCANNING APPARATUS AND ELECTRONIC IMAGING DEVICE**

OPTISCHE ABTASTVORRICHTUNG UND ELEKTRONISCHE ABBILDUNGSVORRICHTUNG

APPAREIL DE BALAYAGE OPTIQUE ET DISPOSITIF D'IMAGERIE ÉLECTRONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **22.09.2020   CN 202011002996**

(43) Date of publication of application:
**28.06.2023   Bulletin 2023/26**

(73) Proprietor: **Zhuhai Pantum Electronics Co., Ltd.
Zhuhai, Guangdong (CN)**

(72) Inventors:
• **NIE, Yongchao**
**Zhuhai, Guangdong 519060 (CN)**
• **WANG, Chao**
**Zhuhai, Guangdong 519060 (CN)**

(74) Representative: **Sun, Yiming
HUASUN Patent- und Rechtsanwälte
Friedrichstraße 33
80801 München (DE)**

(56) References cited:
EP-A1- 2 833 192        CN-A- 1 932 579
CN-A- 104 345 451        CN-A- 109 975 976
CN-A- 112 034 692        JP-A- H0 980 348
US-A1- 2020 174 394        US-B1- 7 800 806

## Description

### TECHNICAL FIELD

The present invention generally relates to the field of optical scanning technology and, more particularly, relates to an optical scanning apparatus and an electronic image-forming apparatus.

### BACKGROUND

Optical scanning apparatuses are widely used in image-forming fields such as printing and image-forming, graphic copying, laser coding, medical image-forming and the like. For example, in a printing or coping product that forms an image on a recording medium, the optical scanning apparatus is configured to scan the scanned target surface of a photosensitive drum to form an electrostatic latent image, which is transferred to paper surface to realize printing or copying operations after a developing process.

With more development of home offices, home printers have become indispensable and important office tools for users. When choosing home printers, users may not only have relatively high requirements for printing performance, but also pay great attention to the appearance of home printers and whether home printers occupy excessive space, that is, high-performance and miniaturized laser printers dominate the market.

While the laser printer is required to be designed to be more miniaturized, the optical scanning unit used for matching the laser printer is also required to be designed to be miniaturized correspondingly. However, in the miniaturization design of the optical scanning unit, it needs to meet configuration requirements of focal length and scanning angle. That is, the focal length of the optical scanning unit should be as short as possible, and the scanning angle should be as large as possible. In order to ensure high image precision, the design shape of the image-forming optical lens may be complicated with relatively high fabrication cost.

US 2020/174394 A1 discloses an image forming apparatus that includes a photoconductor including a charge generation layer, a charging member to charge a surface of the photoconductor, and an exposure unit to expose the surface of the photoconductor to form a toner image on the surface of the photoconductor charged. The exposure unit exposes the surface of the photoconductor by scanning a laser beam in a main scanning direction at a non-constant scan rate, and exposure amount per unit length of the surface of the photoconductor in the main scanning direction is larger in a first region than in a second region. The first region is in the surface of the photoconductor exposed at a first scan rate. The second region is in the surface of the photoconductor exposed at a second scan rate higher than the first scan rate. The charge generation layer is thinner in the first region than in the second region.

### SUMMARY

One aspect of the present invention provides an optical scanning apparatus. The optical scanning apparatus includes a light source, configured to emit a light beam; a first optical unit, configured to collimate the light beam emitted from the light source along a primary scanning direction and focus the light beam from the light source along a secondary scanning direction; an optical deflector, configured to deflect the light beam emitted from the first optical unit; and a second optical unit, configured to guide the light beam deflected by the optical deflector on a scanned target surface for forming an image. An image height on the scanned target surface satisfies an expression: $Y=fc\times\tan(B\times\theta)$, where Y denotes the image height on the scanned target surface, fc denotes an image-forming characteristic coefficient of the second optical unit, B denotes a scanning coefficient of the second optical unit, $\theta$ denotes an effective scanning angle of the optical scanning apparatus, and all region or a partial region in effective scanning range of the second optical unit satisfies a condition: $0.76\leq B\leq 0.82$.

Other aspects of the present disclosure, an aperture stop, disposed between the light source and the optical deflector for shaping up the light beam emitted from the light source and making the shaped light beam incident to the first optical unit.

Other aspects of the present disclosure, the first optical unit includes a collimating lens for collimating the light beam emitted from the light source along the primary scanning direction, and a cylindrical lens for focusing the light beam emitted from the light source along the secondary direction.

Other aspects of the present disclosure, the first optical unit includes an anamorphic lens for collimating the light beam emitted from the light source along the primary scanning direction and focusing the light beam emitted from the light source along the secondary scanning direction.

Other aspects of the present disclosure, the optical deflector includes an optical polyhedron disposed with a plurality of reflecting mirrors, and the optical polyhedron is configured to deflect the light beam emitted from the first optical unit.

Other aspects of the present disclosure, the second optical unit makes the deflection surface of the optical deflector and the scanned target surface in a conjugate relationship.

Other aspects of the present disclosure, the image height on the scanned target surface is capable of being corrected, and a correction expression of the image height is:

$$Y_1 = Y_0 + \triangle Y$$

wherein $Y_1$ denotes an image height value after correction, $Y_0$ denotes an image height value before correction, and $\triangle Y$ denotes an image height correction value.

Other aspects of the present disclosure , an expression of the image height correction value is:

$$\triangle Y = A_n \times Y^n + A_{n-1} \times Y^{n-1} + A_{n-2} \times Y^{n-2} + \ldots + A_1 \times Y + A_0$$

wherein Y denotes a standard image height, n denotes a positive integer, and $A_0 \sim A_n$ denotes constants.

Another aspect of the present invention provides an electronic image-forming apparatus including an optical scanning apparatus. The electronic image-forming apparatus further includes a photosensitive drum, matched with the optical scanning apparatus, where the light beam emitted from the optical scanning apparatus forms an electrostatic latent image on a photosensitive surface of the photosensitive drum; a developing unit, configured to develop the electrostatic latent image to form a toner image; a transferring unit, configured to transfer the toner image to a transferring medium; and a fixing unit, configured to fix the transferred toner image on the transferring medium.

An electronic image-forming apparatus includes an optical scanning apparatus. The optical scanning apparatus includes a light source, configured to emit a light beam; a first optical unit, configured to collimate the light beam emitted from the light source along a primary scanning direction and focus the light beam from the light source along a secondary scanning direction; an optical deflector, configured to deflect the light beam emitted from the first optical unit; and a second optical unit, configured to guide the light beam deflected by the optical deflector on a scanned target surface for forming an image, where an image height on the scanned target surface satisfies an expression: $Y = fc \times \tan(B \times \theta)$, where Y denotes the image height on the scanned target surface, fc denotes an image-forming characteristic coefficient of the second optical unit, B denotes a scanning coefficient of the second optical unit, $\theta$ denotes an effective scanning angle of the optical scanning apparatus, and all region or a partial region in effective scanning range of the second optical unit satisfies a condition: $0.76 \leq B \leq 0.82$. In the image height expression of the scanned target surface, since the scanning coefficient B satisfies the condition of $0.76 \leq B \leq 0.82$, the value of $\tan(B \times \theta)$ may become smaller. In order to maintain the magnitude of $\tan(B \times \theta)$ to ensure certain image height, on the one hand, it needs to increase effective scanning angle $\theta$ of the optical scanning apparatus; on the other hand, after effective scan angle $\theta$ increases, the magnitude of $\tan(B \times \theta)$ may increase, and the image-forming characteristic coefficient fc of the second optical unit may also be reduced to ensure certain image height. Therefore, the volume of the optical scanning apparatus may be reduced by combining improvements in above-mentioned two aspects, thereby achieving the purpose of reducing the printer volume and reducing production cost.

**BRIEF DESCRIPTION OF THE DRAWINGS**

The drawings are incorporated to be a part of the present invention. The drawings illustrate embodiments consistent with the present invention, and together with the present disclosure, describe the principles of the present invention.

FIG. 1 illustrates a planar view of an optical scanning apparatus according to exemplary embodiments of the present invention.

FIG. 2 illustrates a side view of an optical scanning apparatus according to exemplary embodiments of the present invention.

FIG. 3 illustrates a schematic of image height distribution curves obtained based on data in Table 2 according to exemplary embodiments of the present invention.

FIG. 4 illustrates a schematic of image height error distribution curves obtained based on data in Table 2 according to exemplary embodiments of the present invention.

FIG. 5 illustrates a schematic of image height distribution curves obtained based on data in Table 5 according to exemplary embodiments of the present invention.

FIG. 6 illustrates a schematic of image height error distribution curves obtained based on data in Table 5 according to exemplary embodiments of the present invention.

FIG. 7 illustrates a schematic of an exemplary optical scanning apparatus according to exemplary embodiments of the present invention.

FIG. 8 illustrates a structural schematic of an electrophotographic image-forming apparatus according to exemplary embodiments of the present invention.

FIG. 9 illustrates a structural schematic of a color image-forming apparatus according to exemplary embodiments of the present invention.

By means of above-mentioned drawings, certain embodiments of the present invention have been shown and are described in more detail hereinafter. These drawings and written description are not intended to limit the scope of the disclosed concept in any way, but to illustrate the disclosed concept for those skilled in the art by referring to specific embodiments.

## DETAILED DESCRIPTION

To more clearly illustrate the objectives, technical solutions and advantages of embodiments of the present invention, technical solutions in embodiments of the present invention are completely described with reference to accompanying drawings in embodiments of the present invention hereinafter. Obviously, described embodiments are only a part of embodiments of the present invention, not all of embodiments of the present invention.
The terms involved in the present disclosure are described in following.

1) Primary scanning direction refers to the direction perpendicular to the rotation axis of an optical deflector and the main optical axis of the second optical unit and can also be understood as the direction that a light beam is scanned back and forth after the optical deflector deflects the light beam emitted from a light source.

2) Secondary direction refers to the direction in parallel with the rotation axis of the optical deflector and can also be understood as the direction perpendicular to the primary scanning direction.

3) Scanned target surface refers to the plane where the exiting light beam of the second optical unit scans back and forth.

The apparatus size of the printer is related to the size of the optical scanning apparatus used by the printer. The larger the volume of the optical scanning apparatus is, the larger the volume of the printer is. In order to reduce the volume of the printer, it needs to reduce the volume of the optical scanning apparatus. The parameters of the optical scanning apparatus include focal length, scanning angle, and the like. By shortening the focal length and increasing the scanning angle, the volume of the optical scanning apparatus may be effectively reduced, thereby reducing the volume of the printer.
However, on the one hand, the volume of the optical scanning apparatus is difficult to be reduced due to configuration requirements of the focal length and scanning angle of the optical scanning apparatus. On the other hand, in order to ensure high image precision (that is, magnification), an optical scanning lens with f-$\theta$ characteristics may be configured to achieve the purpose of shortening the focal length and increasing the scanning angle, which may result in that the optical scanning lens has a complicated design shape and is difficult to fabricated.
An optical scanning apparatus and an electronic image-forming apparatus provided by the present invention are provided to solve above-mentioned technical problems in the existing technology.
The present invention provides the optical scanning apparatus and the electronic image-forming apparatus. The optical scanning apparatus may include a light source configured to emit a light beam; a first optical unit configured to collimate the light beam emitted from the light source along the primary scanning direction and focus the light beam emitted from the light source along the secondary direction; an optical deflector configured to deflect the light beam emitted from the first optical unit; and a second optical unit configured to guide the light beam deflected by the optical deflector to the scanned target surface for image-forming. The image height of the scanned target surface may satisfy following expression: $Y = fc \times \tan(B \times \theta)$, where Y denotes the image height of the scanned target surface, fc denotes the image-forming characteristic coefficient of the second optical unit, B denotes the scanning coefficient of the second optical unit, and $\theta$ denotes effective scanning angle of the optical scanning apparatus. All region or a partial region in effective scanning range of the second optical unit satisfy the condition: $0.76 \leq B \leq 0.82$. In the image height expression of the scanned target surface, since the scanning coefficient B satisfies the condition of $0.76 \leq B \leq 0.82$, the value of $\tan(B \times \theta)$ may become

smaller. In order to maintain the magnitude of tan(B×θ) to ensure certain image height, on the one hand, it needs to increase effective scanning angle θ of the optical scanning apparatus; on the other hand, after effective scan angle θ increases, the magnitude of tan(B×θ) may increase, and the image-forming characteristic coefficient fc of the second optical unit may also be reduced to ensure certain image height. Therefore, the volume of the optical scanning apparatus may be reduced by combining improvements in above-mentioned two aspects, thereby achieving the purpose of reducing the printer volume and reducing production cost.

The technical solutions of the present invention and how the technical solutions of the present invention solve above technical problems are described in detail below with embodiments. Following embodiments may be combined with each other, and same or similar concepts or processes may not be described in detail in some embodiments. Embodiments of the present invention are described in conjunction with accompanying drawings hereinafter.

In some embodiments, an optical scanning apparatus is provided.

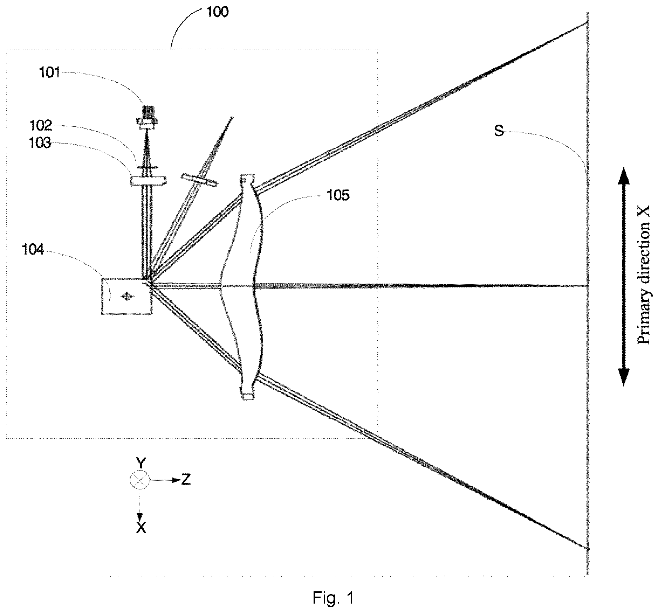

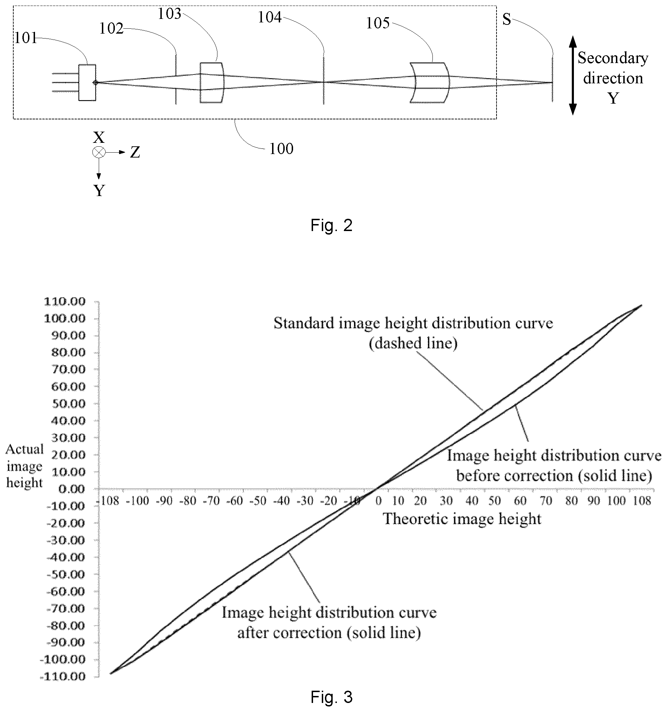

FIG. 1 illustrates a planar view of an optical scanning apparatus 100 according to exemplary embodiments of the present invention. FIG. 2 illustrates a side view of the optical scanning apparatus 100 according to exemplary embodiments of the present invention. Referring to FIGS. 1-2, an optical scanning apparatus 100 includes a light source 101, a first optical unit 103, an optical deflector 104 and a second optical unit 105.

The light source 101 is configured to emit a light beam. The light source 101 may be a light-emitting diode (LED) or a laser diode (LD). The light source 101 may include at least one light-emitting point for emitting the light beam. The light source 101 may be at least one adjustable point light source 101, so that the size of the light beam emitted from the light source 101 may be modulated.

The first optical unit 103 is configured to collimate the light beam emitted from the light source 101 along the primary scanning direction and focus the light beam emitted from the light source 101 along the secondary scanning direction. Collimation refers to maintaining different beams in a parallel relationship, and focus refers to converging different beams at a same point.

For example, referring to FIG. 1, the primary scanning direction in one embodiment is an X direction, that is, the first optical unit 103 may be configured to collimate the light beam emitted from the light source 101 along the X direction in FIG. 1.

In addition, referring to FIG. 2, the secondary direction in one embodiment is a Y direction, that is, the first optical unit 103 may be configured to focus the light beam emitted from the light source 101 along the Y direction in FIG. 2.

The optical deflector 104 is configured to deflect the light beam emitted from the first optical unit 103, for example, deflect and scan the light beam along the primary scanning direction onto a scanned target surface S for image-forming.

The second optical unit 105 is configured to guide the light beam deflected by the optical deflector 104 onto the scanned target surface S for image-forming.

For example, the second optical unit 105 may make the light beam deflected by the optical deflector 104 scan onto the scanned target surface S at a constant or variable linear velocity along the primary scanning direction. The second optical unit 105 may include an image-forming optical lens which makes the light beam deflected by the optical deflector 104 form an image on the scanned target surface S. The number of the image-forming optical lens may be one or more.

The image-forming optical lens is configured to have following scanning characteristics. The image height of the scanned target surface S satisfies following expression: $Y=fc \times \tan(B \times \theta)$, where Y denotes the image height of the scanned target surface S, fc denotes the image-forming characteristic coefficient of the second optical unit 105, B denotes the scanning coefficient of the second optical unit 105, and θ denotes effective scanning angle of the optical scanning apparatus 100. All region or a partial region in effective scanning range of the second optical unit 105 satisfy following condition of $0.76 \leq B \leq 0.82$.

For above expression, on the one hand, the value range of the scanning coefficient B is $0.76 \leq B \leq 0.82$, that is, the value of B×θ must be less than θ itself. Therefore, according to function curve characteristic of the tan function, $\tan(B \times \theta) < \tan(\theta)$; and in order to maintain the magnitude of tan(B×θ), effective scanning angle θ may be increased correspondingly. In addition, by setting $0.76 \leq B \leq 0.82$, on the premise of satisfying the scanning requirement, the design complexity of the apparatus may also be reduced, which may be more beneficial for fabrication and molding. It may be understood that within the above numerical range, the scan coefficient B may be either a constant or a variable.

On the other hand, after effective scan angle θ increases, the magnitude of tan(B×θ) may increase. In order to maintain the image height Y to be constant, the focal length fc of the second optical unit 105 may also be reduced, thereby realizing the reduction of the volume of the optical scanning apparatus 100.

In addition, the second optical unit 105 may make the deflection surface of the optical deflector 104 and the scanned target surface in a conjugate relationship, such that the image-forming optical lens may realize optical surface tilt error compensation.

In one embodiment, an optical scanning apparatus is provided. In the image height expression of the scanned target surface, since the scanning coefficient B satisfies the condition of $0.76 \leq B \leq 0.82$, the value of tan(B×θ) may become smaller. In order to maintain the magnitude of tan(B×θ) to ensure certain image height, on the one hand, it needs to increase effective scanning angle θ of the optical scanning apparatus; on the other hand, after effective scan angle θ increases, the magnitude of tan(B×θ) may increase, and the image-forming characteristic coefficient fc of the second optical unit may also be reduced to ensure certain image height. Therefore, the volume of the optical scanning apparatus may be reduced by combining improvements in above-mentioned two aspects, thereby achieving the purpose of reducing the printer volume and reducing production cost.

According to present invention, all region or a partial region in effective scanning range of the second optical unit 105 satisfy following condition of 0.76≤B≤0.82.

When the value of the scanning coefficient B of the second optical unit 105 is within such value range, the volume of the optical scanning apparatus may be optimally miniaturized while ensuring the scanning quality.

In some embodiments, referring to FIGS. 1-2, the optical scanning apparatus 100 may further include an aperture stop 102. The aperture stop 102 may be disposed between the light source 101 and the first optical unit 103 for shaping the light beam emitted from the light source 101 and making the shaped light beam incident to the first optical unit 103.

For example, the aperture stop 102 may include an opening structure for shaping the light beam emitted from the light source 101. The opening may be, for example, a circle, an ellipse, a square, or other shapes, which may not be limited in one embodiment.

In the structure shown in FIGS. 1-2 of the present invention, the aperture stop 102 may be disposed between the light source 101 and the first optical unit 103, which is only an exemplary illustration of the location of the aperture stop 102. The position of the aperture stop 102 may not be limited to such position. For example, the aperture stop 102 may also be disposed between the optical deflector 104 and the second optical unit 105. That is, in one embodiment, the installation position of the aperture stop 102 may not be strictly limited, which may be flexibly adjusted according to actual requirements.

In some embodiments, the first optical unit 103 may include a collimating lens for collimating the light beam emitted from the light source 101 along the primary scanning direction, and a cylindrical lens for focusing the light beam emitted from the light source 101 along the secondary direction; or the first optical unit 103 may include an anamorphic lens for collimating the light beam emitted from the light source 101 along the primary scanning direction and focusing the light beam emitted from the light source 101 along the secondary scanning direction. That is, the first optical unit 103 may include only one lens or two lenses.

The collimating lens may transform the light beam emitted from the light source 101 into a parallel beam along the primary scanning direction, and the cylindrical lens may converge the parallel beam on the deflection surface of the optical deflector 104 along the secondary direction.

The anamorphic lens may simultaneously perform the function of transforming the light beam emitted from the light source 101 into a parallel beam along the primary scanning direction and converging the parallel beam on the deflection surface of the optical deflector 104 along the secondary direction.

It may be understood that above lens may be made of a plastic material or a glass material, which may not be limited herein.

Therefore, through above-mentioned lens configuration, the first optical unit 103 may play the role of collimating the light beam emitted from the light source 101 along the primary scanning direction and focusing the light beam emitted from the light source 101 along the secondary direction.

In some embodiments, the optical deflector 104 may include an optical polyhedron including a plurality of reflecting mirrors, and the optical polyhedron may be configured to deflect the light beam emitted from the first optical unit 103.

For example, the optical deflector 104 may deflect and scan the light beam onto the scanned target surface along the primary scanning direction for image-forming. The optical deflector 104 may include an optical polyhedron for beam deflection. The optical polyhedron may be a rotating optical polyhedron with a plurality of reflective mirror surfaces. The light beam emitted from the light source 101 may be irradiated to the polyhedron in the optical deflector 104 through the first optical unit 103, such that the light beam may be deflected and reflected toward the scanned target surface along the primary scanning direction.

In some embodiments, the optical scanning apparatus 100 may be also connected to a drive circuit board corresponding to the optical scanning apparatus 100; the drive circuit board may be configured to correct the image height of the scanned target surface.

For example, after increasing effective scanning angle θ of the optical scanning apparatus 100 and reducing the focal length fc of the second optical unit 105, the image height error may increase, and corresponding accuracy requirements may not be satisfied. Therefore, in one embodiment, the image height of the scanned target surface may be further corrected through the drive circuit board, thereby ensuring that corrected image height satisfies precision requirements.

In some embodiments, the drive circuit board may perform image height correction through following expression:

$$Y_1 = Y_0 + \triangle Y$$

where $Y_1$ is an image height value after correction, $Y_0$ is an image height value before correction, and $\triangle Y$ is an image height correction value.

In some embodiments, the drive circuit board may obtain the image height correction value through following expression:

$$\triangle Y = A_n \times Y^n + A_{n-1} \times Y^{n-1} + A_{n-2} \times Y^{n-2} + \ldots + A_1 \times Y + A_0$$

where $\triangle Y$ is the image height correction value, Y is a standard image height, n denotes a positive integer, and $A_0 \sim A_n$ are constants.

In some embodiments, the drive circuit board may be connected to the light source 101, and the drive circuit board may perform image height correction by controlling the light-emitting frequency of the light source 101 based on the image height correction value.

For example, the image height error may be caused by the mismatch between the light-emitting frequency of the light source 101 and the scanning linear velocity. For example, in the case of a same linear speed, if the light-emitting frequency is relatively high, the image height may be lower than the standard image height which results in image compression; and if the light-emitting frequency is relatively low, the image height may be higher than the standard image height which results in image stretching.

In one embodiment, the drive circuit board may perform image height correction by controlling the light-emitting frequency of the light source 101 based on the image height correction value, thereby ensuring the image height to be normal image height.

In some embodiments, examples of performing image height correction are provided. Table 1 shows relevant optical parameters of the optical scanning apparatus 100 in one embodiment.

Table 1

| | |
|---|---|
| Optical resolution | 600 dpi |
| Reference wavelength $\lambda$ | 788 nm |
| Image-forming characteristic parameter fc | 120 mm |
| Scanning coefficient B | 0.8142 |
| Scanning range | 216 mm |
| Effective scanning angle $\theta$ | $\pm51.57°$ |
| Number of mirrors of the optical deflector | 4 |
| Diameter of the circumscribed circle of the optical deflector | 20 mm |
| Effective rotation angle of optical deflector | $\pm25.785°$ |
| Incident angle of primary scanning direction | 90° |
| Incident angle of secondary scanning direction | 0° |

According to the parameters in Table 1, based on the expression $Y = fc \times \tan(B \times \theta)$, the image heights and image height errors before correction are calculated, as shown in Table 2.

Table 2

| Standard image height (mm) Y | Image height before correction (mm) (y=fc*tan (B* $\theta$ ) ) | Image height error before correction |
|---|---|---|
| -108 | -107.99 | -0.01% |
| -100 | -96.74 | -3.26% |
| -90 | -83.99 | -6.68% |
| -80 | -72.39 | -9.51% |
| -70 | -61.70 | -11.85% |
| -60 | -51.74 | -13.76% |
| -50 | -42.35 | -15.31% |

(continued)

| Standard image height (mm) Y | Image height before correction (mm) (y=fc*tan (B* θ ) ) | Image height error before correction |
|---|---|---|
| -40 | -33.39 | -16.52% |
| -30 | -24.77 | -17.44% |
| -20 | -16.38 | -18.08% |
| -10 | -8.15 | -18.45% |
| 0 | 0 | 0.00% |
| 10 | 8.15 | -18.45% |
| 20 | 16.38 | -18.08% |
| 30 | 24.77 | -17.44% |
| 40 | 33.39 | -16.52% |
| 50 | 42.35 | -15.31% |
| 60 | 51.74 | -13.76% |
| 70 | 61.70 | -11.85% |
| 80 | 72.39 | -9.51% |
| 90 | 83.99 | -6.68% |
| 100 | 96.74 | -3.26% |
| 108 | 107.99 | -0.01% |

According to the data in Table 2, it may be seen that the image height errors before correction may not meet relevant error standards (e.g., below $\pm$ 2%).

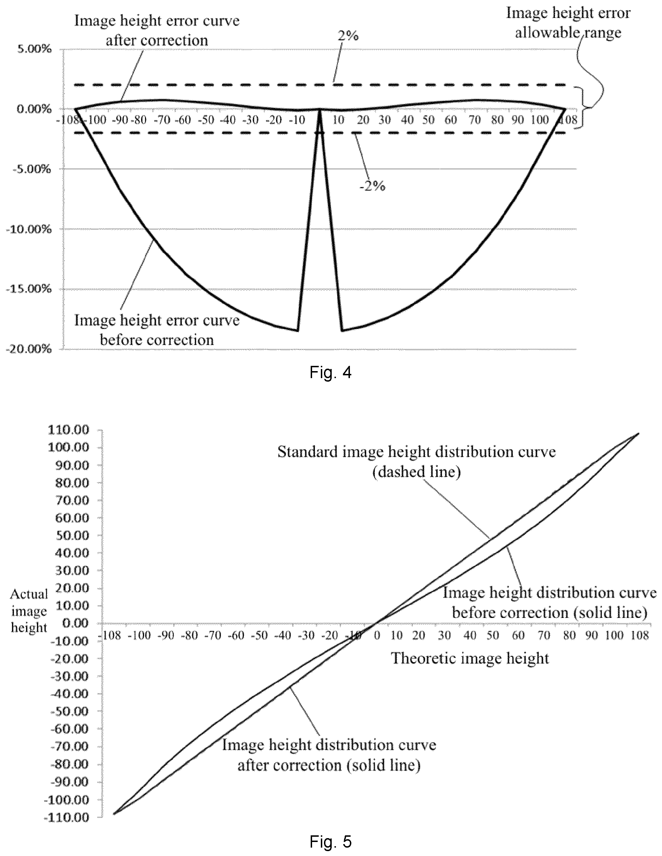

FIG. 3 illustrates a schematic of image height distribution curves obtained based on the data in Table 2 according to exemplary embodiments of the present invention. FIG. 4 illustrates a schematic of image height error distribution curves obtained based on the data in Table 2 according to exemplary embodiments of the present invention. According to FIGS. 3-4, it may be seen that the image height curve may obviously deviate from the standard image height, and the image height errors may also exceed the error standard.

Based on above data, in one embodiment, the image heights may be corrected hereinafter.

(1) When Y≥0,

$$\Delta Y= -0.0000000009Y^5+0.0000001Y^4-0.00002Y^3+0.0005Y^2+0.1755Y+0.0474$$

(2) When Y<0,

$$\Delta Y= -(-0.0000000009|Y|^5+0.0000001|Y|^4-0.00002|Y|^3+0.0005|Y|^2$$

$$+0.1755|Y|+0.0474)$$

The image height data and image height error data after correction are shown in Table 3.

Table 3

| Standard image height (mm) Y | Image height before correction (mm) ( y=fc*tan (B* θ ) +y' ) | Image height error before correction |
|---|---|---|
| -108 | -108.01 | 0.01% |
| -100 | -100.34 | 0.34% |
| -90 | -90.55 | 0.61% |

(continued)

| Standard image height (mm) Y | Image height before correction (mm) ( y=fc*tan (B* θ ) +y' ) | Image height error before correction |
|---|---|---|
| -80 | -80.58 | 0.73% |
| -70 | -70.52 | 0.74% |
| -60 | -60.40 | 0.66% |
| -50 | -50.26 | 0.53% |
| -40 | -40.14 | 0.36% |
| -30 | -30.05 | 0.17% |
| -20 | -20.00 | -0.02% |
| -10 | -9.99 | -0.12% |
| 0 | 0 | 0.00% |
| 10 | 9.99 | -0.12% |
| 20 | 20.00 | -0.02% |
| 30 | 30.05 | 0.17% |
| 40 | 40.14 | 0.36% |
| 50 | 50.26 | 0.53% |
| 60 | 60.40 | 0.66% |
| 70 | 70.52 | 0.74% |
| 80 | 80.58 | 0.73% |
| 90 | 90.55 | 0.61% |
| 100 | 100.34 | 0.34% |
| 108 | 108.01 | 0.01% |

Based on the data in Table 3, it may be seen that the image height errors after correction may be less than ±1%, which satisfies relevant error standards and image accuracy requirements.

Furthermore, referring to FIGS. 3-4, by comparing the image height curves and image height errors before and after correction, it further indicates that after image height correction using above polynomial expression, the image height errors may be significantly reduced, and the image accuracy requirements may be satisfied.

In some embodiments, another example of performing image height correction is provided.

Table 4 shows relevant optical parameters of the optical scanning apparatus 100 in one embodiment.

Table 4

| | |
|---|---|
| Optical resolution | 600 dpi |
| Reference wavelength λ | 788 nm |
| Image-forming characteristic parameter fc | 100 mm |
| Scanning coefficient B | 0.7628 |
| Scanning range | 216 mm |
| Effective scanning angle θ | ±61.88° |
| Number of mirrors of the optical deflector | 4 |
| Diameter of the circumscribed circle of the optical deflector | 20 mm |
| Effective rotation angle of optical deflector | ±30.94° |
| Incident angle of primary scanning direction | 90° |
| Incident angle of secondary scanning direction | 0° |

According to the parameters in Table 4, based on the expression Y=fc×tan(B×θ), the image heights and image height errors before correction are calculated, as shown in Table 5.

Table 5

| Standard image height (mm) Y | Image height before correction (mm) ( y=fc*tan (B* θ ) ) | Image height error before correction |
|---|---|---|
| -108 | -108.00 | 0.00% |
| -100 | -95.58 | -4.42% |
| -90 | -81.95 | -8.94% |
| -80 | -69.93 | -12.59% |
| -70 | -59.12 | -15.54% |
| -60 | -49.26 | -17.91% |
| -50 | -40.10 | -19.79% |
| -40 | -31.50 | -21.26% |
| -30 | -23.29 | -22.36% |
| -20 | -15.38 | -23.12% |
| -10 | -7.64 | -23.57% |
| 0 | 0.00 | 0.00% |
| 10 | 7.64 | -23.57% |
| 20 | 15.38 | -23.12% |
| 30 | 23.29 | -22.36% |
| 40 | 31.50 | -21.26% |
| 50 | 40.10 | -19.79% |
| 60 | 49.26 | -17.91% |
| 70 | 59.12 | -15.54% |
| 80 | 69.93 | -12.59% |
| 90 | 81.95 | -8.94% |
| 100 | 95.58 | -4.42% |
| 108 | 108.00 | 0.00% |

According to the data in Table 5, it may be seen that the image height errors before correction may not satisfy relevant error standards (below ±2%).

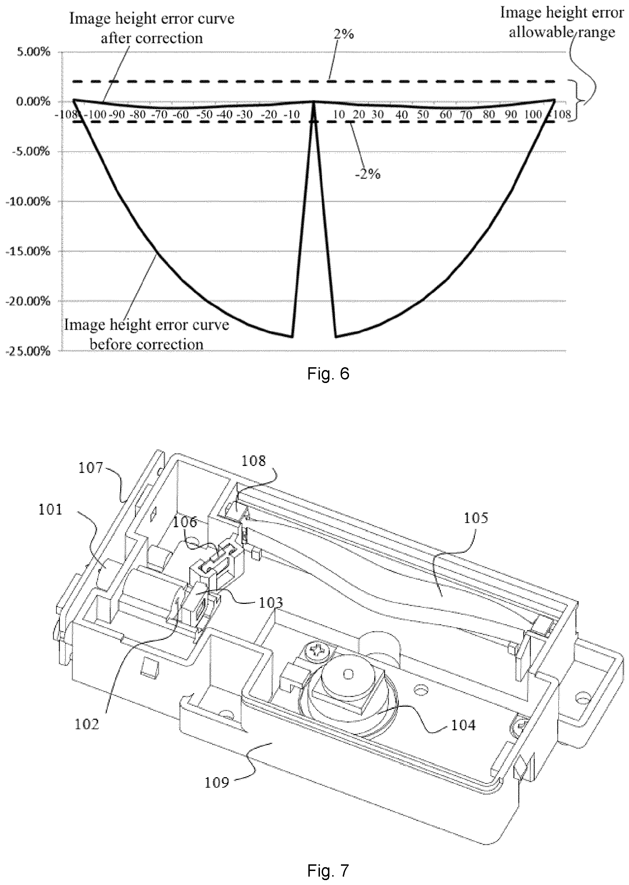

FIG. 5 illustrates a schematic of image height distribution curves obtained based on the data in Table 5 according to exemplary embodiments of the present invention. FIG. 6 illustrates a schematic of image height error distribution curves obtained based on the data in Table 5 according to exemplary embodiments of the present invention. According to FIGS. 5-6, it may be seen that the image height curve may obviously deviate from the standard image height, and the image height errors may also exceed the error standard.

Based on above data, in one embodiment, the image heights may be corrected hereinafter.

(1) When $Y \geq 0$,

$$\Delta Y = -0.000000002Y^5 + 0.0000004Y^4 - 0.00005Y^3 + 0.0014Y^2 + 0.212Y + 0.1411$$

(2) When $Y < 0$,

$$\Delta Y = -(-0.000000002|Y|^5 + 0.0000004|Y|^4 - 0.00005|Y|^3 + 0.0014|Y|^2$$

$$+0.212|Y| + 0.1411)$$

The image height data and image height error data after correction are shown in Table 6.

Table 6

| Standard image height (mm) Y | Image height before correction (mm) ( $y = fc*\tan(B*\theta) + y'$ ) | Image height error before correction |
|---|---|---|
| -108 | -108.24 | 0.23% |
| -100 | -99.92 | -0.08% |
| -90 | -89.69 | -0.35% |
| -80 | -79.58 | -0.53% |
| -70 | -69.57 | -0.62% |
| -60 | -59.63 | -0.62% |
| -50 | -49.72 | -0.56% |
| -40 | -39.82 | -0.46% |
| -30 | -29.89 | -0.37% |
| -20 | -19.93 | -0.33% |
| -10 | -9.99 | -0.12% |
| 0 | 0 | 0.00% |
| 10 | 9.99 | -0.12% |
| 20 | 19.93 | -0.33% |
| 30 | 29.89 | -0.37% |
| 40 | 39.82 | -0.46% |
| 50 | 49.72 | -0.56% |
| 60 | 59.63 | -0.62% |
| 70 | 69.57 | -0.62% |
| 80 | 79.58 | -0.53% |
| 90 | 89.69 | -0.35% |
| 100 | 99.92 | -0.08% |
| 108 | 108.24 | 0.23% |

Based on the data in Table 6, it may be seen that the image height errors after correction may be less than $\pm 1\%$, which satisfies relevant error standards and image accuracy requirements.

In addition, referring to FIGS. 5-6, by comparing the image height curves and image height errors before and after correction, it further indicates that after image height correction using above polynomial expression, the image height errors may be significantly reduced, and the image accuracy requirements may be satisfied.

FIG. 7 illustrates a schematic of exemplary optical scanning apparatus 100 according to exemplary embodiments of the present invention. As shown in FIG. 7, the optical scanning apparatus 100 may include the light source 101, the aperture stop 102, the first optical unit 103, the optical deflector 104, the second optical unit 105, the third optical unit 106, a light source drive circuit board 107, a fixing part 108 and a light scanning unit frame 109.

Referring to FIG. 7, the light source 101 may be fixed on the light scanning unit frame 109 and electrically connected to the light source drive circuit board 107. The aperture stop 102 may be installed on the optical scanning unit frame 109 and may also be integrally formed with the optical scanning unit frame 109. The first optical unit 103 may be disposed between the light source 101 and the optical deflector 104 and fixed on the light scanning unit frame 109. The second optical unit 105 may be fixedly installed on the light scanning unit frame 109 through two fixing parts 108. The third optical unit 106 may be configured to focus the light beam deflected and reflected by the optical deflector 104, so that the light beam may be focused on a photoelectric sensor (not shown in drawings) on the light source drive circuit board 107, and the photoelectric sensor may output a row synchronization signal. In such way, it ensures that beginning ends of the images on the scanned target surface may be aligned. The third optical unit 106 may be fixed on the optical scanning unit frame 109. The light source drive circuit board 107 may control the light-emitting frequency of the light source 101 and the output of the row synchronous signal, and the light source drive circuit board 107 may be fixed on the light scanning unit frame 109.

In some embodiments, an electronic image-forming apparatus is provided. The electronic image-forming apparatus includes the optical scanning apparatus of above-mentioned embodiments, a photosensitive drum, a developing unit, a transferring unit, and a fixing unit.

The photosensitive drum may include an image carrier of scanned target surface, the photosensitive drum may be matched with the optical scanning apparatus, and the light beam emitted from the optical scanning apparatus forms an electrostatic latent image on the photosensitive surface of the photosensitive drum; the developing unit is configured to develop corrected electrostatic latent image to form a toner image; the transferring unit is configured to transfer the toner image to the transferring medium; and the fixing unit is configured to fix transferred toner image on the transferring medium.

The electronic image-forming apparatus in one embodiment may effectively reduce the volume of the electronic image-forming apparatus and lower the production cost of the apparatus through the optical scanning apparatus of various embodiments of the present invention.

In some embodiments, an electrophotographic image-forming apparatus is provided.

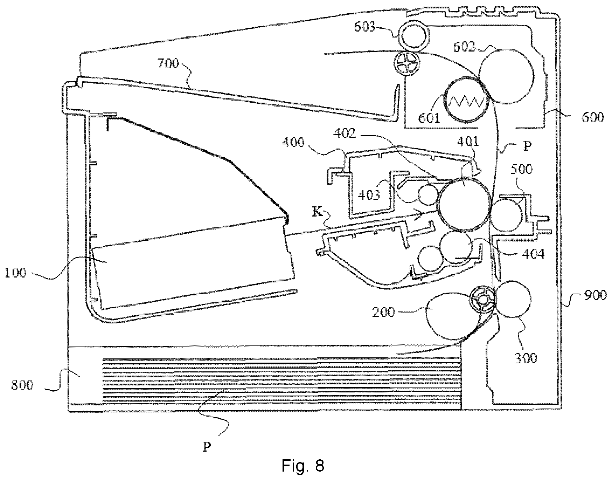

FIG. 8 illustrates a structural schematic of an electrophotographic image-forming apparatus according to exemplary embodiments of the present invention. As shown in FIG. 8, the electrophotographic image-forming apparatus may include the optical scanning apparatus 100, a paper feeding unit 200, a conveying unit 300, an image processing unit 400, a transferring unit 500, a fixing unit 600, a paper discharging tray 700, a paper tray 800, and a frame 900.

The control system of the electrophotographic image-forming apparatus may control the optical scanning apparatus 100 to emit a light beam K which scan onto the surface of the photosensitive drum 401 in the image processing unit 400. The photosensitive drum 401 may be a photoreceptor, which may include a cylindrical metal tube having an outer circumference and a photosensitive layer having a preset thickness formed on the outer circumference. A charging roller 403 inside the image processing unit 400 may rotate to be in contact with the photosensitive drum 401 and charge the surface of the photosensitive drum 401. The optical scanning apparatus 100 may scan the light beam K, which is adjusted according to image information, such that an electrostatic latent image may be formed on the image-forming surface of the photosensitive drum 401 charged by the charging roller 403. In such case, as the photosensitive drum 401 rotates, the image-forming plane may move along the secondary direction, the optical scanning apparatus 100 may be synchronized with horizontal synchronization signal to scan the light beam onto the image-forming plane along the primary scanning direction. Therefore, an electrostatic latent image may be formed on the image-forming surface of the photosensitive drum 401. The developing roller 404 may be in contact with the photosensitive drum 401 and transfer the toner to the surface of the photosensitive drum 401, thereby forming the toner image; and such process is called the developing process.

On the other hand, a recording medium P may be stacked in the paper tray 800, and the paper feeding unit 200 may rotate according to the instructions of the printer to sequentially send the recording medium P to the conveying unit 300; and the conveying unit may then convey the recording medium P between the image processing unit 400 and the transferring unit 500 to be in contact with the surface of the photosensitive drum 401. As the photosensitive drum 401 rotates, the toner image on the surface of the photosensitive drum 401 may be transferred to the recording medium P under the action of the transferring unit 500; and such process is called the transferring process. The transferring unit 500 may have a certain voltage, so that the toner image on the surface of the photosensitive drum 401 may be more easily attracted to the recording medium P. In addition, residual toner on the surface of the photosensitive drum 401 after transferring may be cleaned and removed by a cleaning unit 402.

The toner image transferred to the recording medium P may be heated and melted by the heating roller 601 of the fixing unit 600 and fixed on the recording medium P under the pressure of the pressing roller 602; and such process is called the fixing process.

The recording medium P after fixing may be conveyed by a discharging roller 603 and discharged onto the paper discharging tray 700 outside the printer, thereby completing entire printing process.

The electrophotographic image-forming apparatus in one embodiment may effectively reduce the volume of the electrophotographic image-forming apparatus by using the optical scanning apparatus 100 of various embodiments of the present invention.

In some embodiments, a color image-forming apparatus is provided.

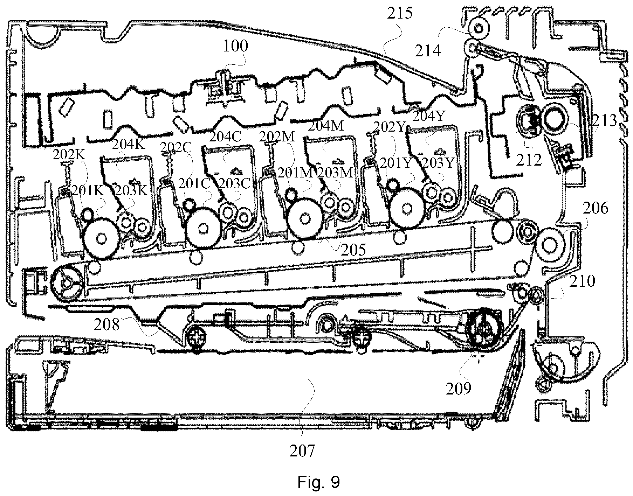

FIG. 9 illustrates a structural schematic of a color image-forming apparatus according to exemplary embodiments of the present invention. As shown in FIG. 9, the color image-forming apparatus may include photosensitive drums 201Y-K (Y, M, C, K), charging rollers 202Y-K, developing rollers 203Y-K, toner bins 204Y-K, a transferring belt 205, a secondary transferring roller 206, a paper feeding tray 207, a manual feeding tray 208, a paper feeding roller 209, a conveying roller 210, an optical scanning apparatus 100, a heating roller 212, a pressing roller 213, a discharging roller 214, and a paper discharging tray 215.

The optical scanning apparatus 100 may be, for example, in the form of a single LSU (laser scanning unit), including four beam paths. The four charging rollers 202Y-K may be configured to charge the surfaces of four photosensitive drums 201Y-K respectively; the four optical paths of the LSU 100 may respectively emit laser beams to form electrostatic latent images on the surfaces of the photosensitive drums 201Y-K; and four developing rollers 203Y-K may be configured to develop and form a toner image of one color on the surface of each of the photosensitive drums 201Y-K respectively. The color image-forming apparatus may use a secondary transfer manner, that is, four photosensitive drums 201Y-K may sequentially transfer the toner images to the transferring belt 205; and then the color toner image formed on the transferring belt 205 may be secondarily transferred onto the paper via the second transferring roller 206. The paper feeding tray 207 may be configured to store papers, and the paper feeding roller 209 may be configured to convey the stored papers to the conveying path. The conveying roller 210 may be configured to convey the papers to the secondary transferring roller 206.

The secondary transferring roller 206 may convey the papers with formed images to the holding area between the heating roller 212 and the pressing roller 213; the heating roller 212 and the pressing roller 213 may be configured to fix the toner images on the papers; the heating roller 212 may use a ceramic heating manner; the heating roller 212 and pressing roller 213 may convey the papers after fixing to the discharging roller 214; and the discharging roller 214 may discharge the papers to the paper discharging tray 215 to be stacked.

The color image-forming apparatus in one embodiment may effectively reduce the volume of the color image-forming apparatus through the optical scanning apparatus 100 in various embodiments of the present invention.

**Claims**

1. An optical scanning apparatus (100), comprising:

   a light source (101), configured to emit a light beam;
   a first optical unit (103), configured to collimate the light beam emitted from the light source (101) along a primary scanning direction and focus the light beam from the light source (101) along a secondary scanning direction;
   an optical deflector (104), configured to deflect the light beam emitted from the first optical unit (103); and
   a second optical unit (105), configured to guide the light beam deflected by the optical deflector (104) on a scanned target surface for forming an image, wherein:

   an image height on the scanned target surface satisfies an expression: $Y=fc\times\tan(B\times\theta)$, wherein Y denotes the image height on the scanned target surface, fc denotes an image-forming characteristic coefficient of the second optical unit (105), B denotes a scanning coefficient of the second optical unit, $\theta$ denotes an effective scanning angle of the optical scanning apparatus (100),
   **characterized in that**,
   all region or the partial region in effective scanning range of the second optical unit (105) satisfies a condition: $0.76 \leq B \leq 0.82$.

2. The optical scanning apparatus (100) according to claim 1, further including:
   an aperture stop (102), disposed between the light source (101) and the optical deflector (104) for shaping up the light beam emitted from the light source (101) and making the shaped light beam incident to the first optical unit (103).

3. The optical scanning apparatus (100) according to claim 1, wherein:
   the first optical unit (103) includes a collimating lens for collimating the light beam emitted from the light source (101) along the primary scanning direction, and a cylindrical lens for focusing the light beam emitted from the light source (101) along the secondary direction.

4. The optical scanning apparatus (100) according to claim 1, wherein:
   the first optical unit (103) includes an anamorphic lens for collimating the light beam emitted from the light source (101) along the primary scanning direction and focusing the light beam emitted from the light source (101) along the secondary scanning direction.

5. The optical scanning apparatus (100) according to claim 1, wherein:
   the optical deflector (104) includes an optical polyhedron disposed with a plurality of reflecting mirrors, and the optical polyhedron is configured to deflect the light beam emitted from the first optical unit (103).

6. The optical scanning apparatus (100) according to claim 1, wherein:
the second optical unit (105) makes the deflection surface of the optical deflector (104) and the scanned target surface in a conjugate relationship.

7. The optical scanning apparatus (100) according to any one of claims 1 to 6, wherein:

the image height on the scanned target surface is capable of being corrected, and a correction expression of the image height is:

$$Y_1 = Y_0 + \triangle Y$$

wherein $Y_1$ denotes an image height value after correction, $Y_0$ denotes an image height value before correction, and $\triangle Y$ denotes an image height correction value.

8. The optical scanning apparatus (100) according to claim 7, wherein:
an expression of the image height correction value is:

$$\triangle Y = A_n \times Y^n + A_{n-1} \times Y^{n-1} + A_{n-2} \times Y^{n-2} + \ldots + A_1 \times Y + A_0$$

wherein Y denotes a standard image height, n denotes a positive integer, and $A_0 \sim A_n$ denotes constants.

9. An electronic image-forming apparatus, comprising an optical scanning apparatus (100) according to any one of claims 1 to 8; and further comprising a photosensitive unit (401) capable of forming a latent image on the scanning target surface, a developing unit (404) that develops the latent image on the photosensitive unit (401) into a toner image, a transfer apparatus (500) that transfers the toner image to a transfer medium, and a fixing apparatus (600) that fixes the toner image on the transfer medium.

**Patentansprüche**

1. Eine optische Abtastvorrichtung (100), umfassend:

eine Lichtquelle (101), die dazu konfiguriert ist, einen Lichtstrahl auszusenden;
eine erste optische Einheit (103), die dazu konfiguriert ist, den von der Lichtquelle (101) emittierten Lichtstrahl entlang einer Hauptabtastrichtung zu kollimieren und den Lichtstrahl von der Lichtquelle (101) entlang einer Sekundärabtastrichtung zu fokussieren;
einen optischen Ablenker (104), der dazu konfiguriert ist, den von der ersten optischen Einheit (103) emittierten Lichtstrahl abzulenken; und
eine zweite optische Einheit (105), die dazu konfiguriert ist, den vom optischen Ablenker (104) abgelenkten Lichtstrahl auf einer abgetasteten Zielfläche zur Bildbildung zu führen,
wobei die Bildhöhe auf der abgetasteten Zielfläche die folgende Gleichung erfüllt: $Y = fc \times \tan(B \times \theta)$, wobei Y die Bildhöhe auf der abgetasteten Zielfläche bezeichnet, fc einen bildgebenden Charakteristik-Koeffizienten der zweiten optischen Einheit (105) bezeichnet, B einen Abtastkoeffizienten der zweiten optischen Einheit bezeichnet und $\theta$ einen effektiven Abtastwinkel der optischen Abtastvorrichtung (100) bezeichnet,
**dadurch gekennzeichnet, dass**
der gesamte Bereich oder ein Teilbereich im effektiven Abtastbereich der zweiten optischen Einheit (105) die Bedingung erfüllt: $0{,}76 \leq B \leq 0{,}82$.

2. Die optische Abtastvorrichtung (100) nach Anspruch 1, ferner umfassend:
eine Aperturblende (102), die zwischen der Lichtquelle (101) und dem optischen Ablenker (104) angeordnet ist, um den von der Lichtquelle (101) emittierten Lichtstrahl zu formen und den geformten Lichtstrahl auf die erste optische Einheit (103) auftreffen zu lassen.

3. Die optische Abtastvorrichtung (100) nach Anspruch 1, wobei:
die erste optische Einheit (103) eine Kollimationslinse zur Kollimation des von der Lichtquelle (101) emittierten Lichtstrahls entlang der Hauptabtastrichtung und eine Zylinderlinse zur Fokussierung des von der Lichtquelle (101) emittierten Lichtstrahls entlang der Sekundärabtastrichtung umfasst.

**4.** Die optische Abtastvorrichtung (100) nach Anspruch 1, wobei:
die erste optische Einheit (103) eine anamorphotische Linse umfasst, die dazu konfiguriert ist, den von der Lichtquelle (101) emittierten Lichtstrahl entlang der Hauptabtastrichtung zu kollimieren und den von der Lichtquelle (101) emittierten Lichtstrahl entlang der Sekundärabtastrichtung zu fokussieren.

**5.** Die optische Abtastvorrichtung (100) nach Anspruch 1, wobei:
der optische Ablenker (104) ein optisches Polygon umfasst, das mit einer Mehrzahl von reflektierenden Spiegeln versehen ist, und wobei das optische Polygon dazu konfiguriert ist, den von der ersten optischen Einheit (103) emittierten Lichtstrahl abzulenken.

**6.** Die optische Abtastvorrichtung (100) nach Anspruch 1, wobei:
die zweite optische Einheit (105) die Ablenkfläche des optischen Ablenkers (104) und die abgetastete Zielfläche in eine konjugierte Beziehung setzt.

**7.** Die optische Abtastvorrichtung (100) nach einem der Ansprüche 1 bis 6, wobei:

die Bildhöhe auf der abgetasteten Zielfläche korrigiert werden kann, und ein Korrekturausdruck für die Bildhöhe lautet:

$$Y_1 = Y_0 + \triangle Y$$

wobei $Y_1$ einen Bildhöhenwert nach der Korrektur, $Y_0$ einen Bildhöhenwert vor der Korrektur und $\triangle Y$ einen Bildhöhenkorrekturwert bezeichnet.

**8.** Die optische Abtastvorrichtung (100) nach Anspruch 7, wobei:

ein Ausdruck für den Bildhöhenkorrekturwert lautet:

$$\triangle Y = A_n \times Y^n + A_{n-1} \times Y^{n-1} + A_{n-2} \times Y^{n-2} + \ldots + A_1 \times Y + A_0$$

wobei Y eine Standardbildhöhe bezeichnet, n eine positive ganze Zahl ist, und $A_0$ bis An Konstanten sind.

**9.** Eine elektronische Bilderzeugungsvorrichtung, umfassend eine optische Abtastvorrichtung (100) nach einem der Ansprüche 1 bis 8; ferner umfassend eine lichtempfindliche Einheit (401), die dazu in der Lage ist, ein latentes Bild auf der abgetasteten Zielfläche zu erzeugen, eine Entwicklereinheit (404), die das latente Bild auf der lichtempfindlichen Einheit (401) in ein Tonerbild entwickelt, eine Übertragungsvorrichtung (500), die das Tonerbild auf ein Übertragungsmedium überträgt, und eine Fixiervorrichtung (600), die das Tonerbild auf dem Übertragungsmedium fixiert.

**Revendications**

**1.** Un appareil de balayage optique (100), comprenant :

une source lumineuse (101), configurée pour émettre un faisceau lumineux ;
une première unité optique (103), configurée pour collimater le faisceau lumineux émis par la source lumineuse (101) selon une direction de balayage principal et focaliser le faisceau lumineux de la source lumineuse (101) selon une direction de balayage secondaire ;
un déflecteur optique (104), configuré pour dévier le faisceau lumineux émis par la première unité optique (103) ; et
une deuxième unité optique (105), configurée pour guider le faisceau lumineux dévié par le déflecteur optique (104) sur une surface cible balayée afin de former une image,
dans lequel la hauteur d'image sur la surface cible balayée satisfait l'expression suivante: $Y = fc \times \tan(B \times \theta)$, où Y représente la hauteur d'image sur la surface cible balayée, fc représente un coefficient caractéristique de formation d'image de la deuxième unité optique (105), B représente un coefficient de balayage de la deuxième unité optique, et $\theta$ représente un angle de balayage effectif de l'appareil de balayage optique (100),
**caractérisé en ce que**
l'ensemble de la région ou une région partielle de la plage de balayage effective de la deuxième unité optique (105) satisfait la condition suivante : 0,76 ≤ B ≤ 0,82.

**2.** L'appareil de balayage optique (100) selon la revendication 1, comprenant en outre :
un diaphragme d'ouverture (102), disposé entre la source lumineuse (101) et le déflecteur optique (104) afin de façonner le faisceau lumineux émis par la source lumineuse (101) et d'incider le faisceau lumineux formé sur la première unité optique (103).

**3.** L'appareil de balayage optique (100) selon la revendication 1, dans lequel :
la première unité optique (103) comprend une lentille de collimation pour collimater le faisceau lumineux émis par la source lumineuse (101) selon la direction de balayage principal, et une lentille cylindrique pour focaliser le faisceau lumineux émis par la source lumineuse (101) selon la direction secondaire.

**4.** L'appareil de balayage optique (100) selon la revendication 1, dans lequel :
la première unité optique (103) comprend une lentille anamorphique configurée pour collimater le faisceau lumineux émis par la source lumineuse (101) selon la direction de balayage principal et focaliser le faisceau lumineux émis par la source lumineuse (101) selon la direction de balayage secondaire.

**5.** L'appareil de balayage optique (100) selon la revendication 1, dans lequel :
le déflecteur optique (104) comprend un polyèdre optique muni d'une pluralité de miroirs réfléchissants, et le polyèdre optique est configuré pour dévier le faisceau lumineux émis par la première unité optique (103).

**6.** L'appareil de balayage optique (100) selon la revendication 1, dans lequel :
la deuxième unité optique (105) place la surface de déviation du déflecteur optique (104) et la surface cible balayée dans une relation conjuguée.

**7.** L'appareil de balayage optique (100) selon l'une quelconque des revendications 1 à 6, dans lequel :

la hauteur d'image sur la surface cible balayée est capable d'être corrigée, et une expression de correction de la hauteur d'image est la suivante :

$$Y_1 = Y_0 + \triangle Y$$

où $Y_1$ représente la valeur de hauteur d'image après correction, $Y_0$ représente la valeur de hauteur d'image avant correction, et $\triangle Y$ représente la valeur de correction de la hauteur d'image.

**8.** L'appareil de balayage optique (100) selon la revendication 7, dans lequel :

une expression de la valeur de correction de la hauteur d'image est :

$$\triangle Y = A_n \times Y^n + A_{n-1} \times Y^{n-1} + A_{n-2} \times Y^{n-2} + \ldots + A_1 \times Y + A_0$$

où Y représente une hauteur d'image standard, n représente un entier positif, et $A_0$-$A_n$ représentent des constantes.

**9.** Un appareil de formation d'image électronique, comprenant un appareil de balayage optique (100) selon l'une quelconque des revendications 1 à 8 ; comprenant en outre une unité photosensible (401) capable de former une image latente sur la surface cible balayée, une unité de développement (404) qui développe l'image latente sur l'unité photosensible (401) en une image de toner, un appareil de transfert (500) qui transfère l'image de toner sur un support de transfert, et un appareil de fixation (600) qui fixe l'image de toner sur le support de transfert.

Fig. 1

Fig. 2

Fig. 3

Image height error curve
after correction

2%

Image height error
allowable range

5.00%

0.00%

-108 -100 -90 -80 -70 -60 -50 -40 -30 -20 -10   10 20 30 40 50 60 70 80 90 100 108

-2%

-5.00%

-10.00%

-15.00%

Image height error curve
before correction

-20.00%

Fig. 4

110.00
100.00
90.00
80.00
70.00
60.00
50.00
40.00
30.00

Standard image height distribution curve
(dashed line)

Actual 20.00
image 10.00
height 0.00
-10.00

-108 -100 -90 -80 -70 -60 -50 -40 -30 -20 -10  0  10 20 30 40 50 60 70 80 90 100 108

Image height distribution curve
before correction (solid line)

Theoretic image height

-20.00
-30.00
-40.00
-50.00
-60.00
-70.00
-80.00
-90.00
-100.00
-110.00

Image height distribution curve
after correction (solid line)

Fig. 5

Fig. 6

Fig. 7

Fig. 8

Fig. 9

**REFERENCES CITED IN THE DESCRIPTION**

**Patent documents cited in the description**

- US 2020174394 A1